(19) Europäisches Patentamt
European Patent Office
Office européen des brevets

(11) EP 1 072 400 B1

(12) EUROPEAN PATENT SPECIFICATION

(45) Date of publication and mention of the grant of the patent:
**13.09.2006 Bulletin 2006/37**

(51) Int Cl.:
***B32B 27/08*** *(2006.01)* ***C08L 25/04*** *(2006.01)*
***C08F 210/00*** *(2006.01)*

(21) Application number: **00116399.7**

(22) Date of filing: **28.07.2000**

(54) **Thin layer body composed of olefin-based resin**

Dünnschichtiger Gegenstand, bestehend aus einer Harzzusammensetzung auf Olefinbasis

Couche mince de matériau composée de composition de polyoléfine

(84) Designated Contracting States:
**ES FR IT**

(30) Priority: **30.07.1999 JP 21758899**

(43) Date of publication of application:
**31.01.2001 Bulletin 2001/05**

(73) Proprietor: **Sumitomo Chemical Company, Limited**
**Tokyo 104-8260 (JP)**

(72) Inventors:
- **Kojima, Tomoki**
  **Toyonaka-shi**
  **Osaka (JP)**
- **Sakaya, Taiichi**
  **Takatsuki-shi**
  **Osaka (JP)**

(74) Representative: **Vossius & Partner**
**Siebertstrasse 4**
**81675 München (DE)**

(56) References cited:

| | |
|---|---|
| **EP-A- 0 970 976** | **EP-A- 1 002 808** |
| **WO-A-98/09999** | **US-A- 5 872 201** |

- **WU Q ET AL: "ETHYLENE/STYRENE COPOLYMERIZATION IN THE PRESENCE OF CYCLOPENTADIENYLTITANIUM TRIBENZYL OXIDE AND VARIOUS METHYLALUMINOXANES" MACROMOLECULAR CHEMISTRY AND PHYSICS,DE,WILEY VCH, WEINHEIM, vol. 199, no. 8, 1 August 1998 (1998-08-01), pages 1715-1720, XP000785426 ISSN: 1022-1352**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 072 400 B1

## Description

The present invention relates to a thin layer body composed of an olefin-based rein, more particularly, relates to an agricultural covering film used for e.g. a house, tunnel, curtain or mulching in agriculture.

A thin layer body, particularly a film composed of an olefin-base resin has excellent flexibility, and recently, there is increasing demand for olefin-based resin films such as polyethylene films and ethylene/vinyl acetate copolymer films as a covering film used for e. g. a house, tunnel, curtain or mulching in agriculture, accordingly, olefin-based resin films having excellent radiation blocking property and heat retaining property are required.

US-A-5,872,201 discloses substantially random interpolymers comprising (1) ethylene, (2) one or more aromatic vinylidene monomers or hindered aliphatic or cycloaliphatic vinylidene monomers, and (3) one or more olefinic monomers having from 3 to about 20 carbon atoms. These interpolymers are said to be useful as film, or as sheet or as a component of a multilayered structure, as fabricated articles, as foams, fibers or emulsions and as adhesives, in adhesive formulations and in sealant compositions.

An object of the present invention is to provide a thin layer body as defined below, particularly, an agricultural covering film having excellent radiation blocking property composed of an olefin-based resin.

This object could be achieved on the basis of the finding that a copolymer, having specific characteristic, of ethylene and α-olefin and alkenyl aromatic hydrocarbon has excellent radiation blocking property and that a thin layer body, particularly a film, having a layer composed of this copolymer is useful as an agricultural covering film having excellent radiation blocking property and excellent heat retaining property, and they have reached the present invention. Herein, the radiation indicates an infrared ray having a wavelength from 2 to 25 μm emitted from a substance. Radiation blocking property is a characteristic to absorb or reflect this radiation.

The thin layer body of the present invention is a thin layer body comprising at least three layers including at least one intermediate layer comprising an ethylene and α-olefin and alkenyl aromatic hydrocarbon copolymer having any of the following properties:

(a) it has substantially no crystallinity,
(b) it shows substantially no peak in an endothermic curve (a DSC chart) obtained by means of a differential scanning calorimeter; and
(c) it has a ratio of the area of the peak appearing in the range of from 34.0 to 36.0 ppm in a $^{13}$C-NMR spectrum to that of the peak appearing in the range of from 36.0 to 38.0 ppm of from 0.01 to 0.25;
and outermost layers other than the above intermediate layer.
Furthermore, the present invention relates to the use of the above thin layer body as an agricultural covering film.

Hereinafter, the above-mentioned copolymer of ethylene α-olefin alkenyl aromatic hydrocarbon is often referred to as a copolymer (A). Further, a layer composed of the copolymer (A) is often referred to as a layer E. The copolymer (A) is, in other words, an ethylene/α-olefin/alkenyl aromatic hydrocarbon copolymer.

The thin layer body of the present invention has excellent transparency since the copolymer (A) has substantially no crystallinity in the thin layer body of the present invention. Therefore, it is important that the copolymer (A) is a copolymer having substantially no crystallinity.

The copolymer having substantially no crystallinity means, for example, a copolymer showing substantially no peak in an endothermic curve (a DSC chart) obtained by means of a differential scanning calorimeter. As the copolymer having substantially no crystallinity, there can be used a copolymer having a ratio of the area of the peak appearing in the range of from 34.0 to 36.0 ppm in a $^{13}$C-NMF. spectrum to that of the peak appearing in the range of from 36.0 to 38.0 ppm of from 0.01 to 0.25.

When the copolymer (A) comprises at least one copolymer whose repeating units derived from the alkenyl aromatic hydrocarbon substantially having no stereoregularity, the thin layer body of the present invention becomes to have better transparency and better flexibility. Therefore, it is preferable that the copolymer (A) comprises at least one copolymer whose repeating units derived from the alkenyl aromatic hydrocarbon substantially have no stereoregularity. The fact that the repeating units derived from the alkenyl aromatic hydrocarbon in the copolymer substantially have no stereoregularity may be confirmed from a $^{13}$C-NMR spectrum measurement which detected a signal corresponding to a methylene group (Sαβ, Sββ) as multiplet.

Further, when the copolymer (A) comprises at least one copolymer which has a loss tangent (tan δ) whose maximum value, X, and a fraction, S (mol%), of the repeating units derived from the alkenyl aromatic hydrocarbon satisfy formula (1), the thin layer body of the present invention becomes to have better flexibility. Therefore, the copolymer (A) preferably comprises at least one copolymer which has a loss tangent (tan δ) whose maximum value, X, and a fraction, S (mol%), of the repeating units derived from the alkenyl aromatic hydrocarbons satisfy formula (1). Ones satisfy formula (2) are particularly preferred.

$$X > -0.0005 \times S^2 + 0.06 \times S + 0.04 \qquad (1)$$

$$X > -0.0005 \times S^2 + 0.06 \times S + 0.17 \qquad (2)$$

In formulas (1) and (2), tan δ indicates a ratio (E''/E') of a loss elastic modulus (E'') to a storing elastic modulus (E') obtained by the measurement of solid dynamic viscoelasticity under the conditions of a frequency at 5 Hz, a rate of temperature elevation at 2°C/minute and a displacement amplitude at 10 μm using a 20 mm × 3.0 mm × 0.3 mm pressed sheet.

The amount of repeating units derived from an alkenyl aromatic hydrocarbon contained in the copolymer (A) is preferably from about 5 to 40 mol%, more preferably from 10 to 40 mol% from the viewpoints of radiation blocking property, transparency and flexibility of the thin layer body.

As the α-olefin in the copolymer (A), α-olefins having from 3 to 20 carbon atoms are preferred. Typically, examples thereof include linear α-olefins such as propylene, butene-1, pentene-1, hexene-1, heptene-1, octene-1, nonene-1 and decene-1, branched α-olefins such as 3-methylbutene-1, 3-methylpentene-1, 4-methylpentene-1 and 5-methyl-hexene-1 and vinylcyclohexane. Particularly preferred α-olefins are propylene, butene-1, pentene-1, hexene-1, heptene-1, octene-1, 4-methylpentene-1 and vinylcyclohexane. Among them, propylene is particularly preferred.

As the alkenyl aromatic hydrocarbon in the copolymer (A), alkenyl aromatic hydrocarbons having an aromatic hydrocarbon group with from 6 to 25 carbon atoms. Typically, examples of the aromatic hydrocarbon group include a phenyl group, a tolyl group, a xylyl group, a tert-butylphenyl group, a vinylphenyl group, a naphthyl group, a phenanthryl group and an anthracenyl group. The phenyl group, the tolyl group, the xylyl group, the tert-butylphenyl group, the vinylphenyl group and the naphthyl group are particularly preferred.

Typically, examples of the alkenyl aromatic hydrocarbon include styrene, alkylstyrenes such as p-methylstyrene, m-methylstyrene, o-methylstyrene, p-ethylstyrene, m-ethylstyrene, o-ethylstyrene, 2,4-dimethylstyrene, 2,5-dimethylstyrene, 3,4-dimethylstyrene, 3,5-dimethylstyrene, 3-methyl-5-ethylstyrene, p-tert-butylstyrene and p-sec-butylstyrene; alkenylbenzenes such as 2-phenylpropylene and 2-phenylbutene; and vinylnaphthalenes such as 1-vinylnaphthalene. Among these alkenyl aromatic compounds, styrene, p-methylstyrene, m-methylstyrene, o-methylstyrene, p-tert-butylstyrene, 2-phenylpropylene and 1-vinylnaphthalene are preferred, and styrene is particularly preferred.

There is no particular limitation in the process for producing the thin layer body of ethylene α-olefin alkenyl aromatic hydrocarbon in the present invention. There may be applied various kinds of methods, for example, a gas phase polymerization in a batch or continuous system, a bulk polymerization method, a solution or slurry polymerization method using an adequate solvent. As a polymerization catalyst, for example, Ziegler catalysts and metallocene-based catalysts disclosed in JP-A-3-250007 7-70223, 9-309925, 9-87313 and 9-183809 and WO98/09999
may be used, but the catalyst is not restricted to these ones. In the polymerization, a chain transfer agent such as hydrogen may be used for the purpose of the adjustment of a molecular weight of the copolymer.

The copolymer (A) in the thin layer body of the present invention may be produced by using, for example, a catalyst prepared from the following (B) and (C) and/or (D).

(B): The transition metal complex represented by the following general formulas [I], [II] or [III]:

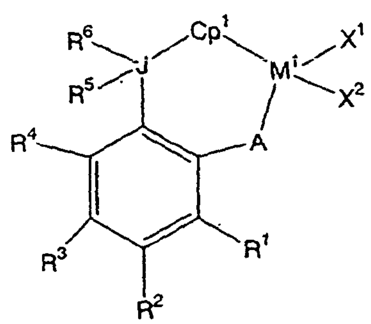

[I]

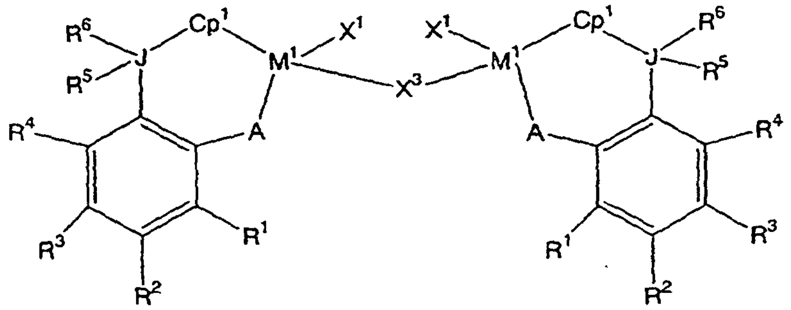

[II]

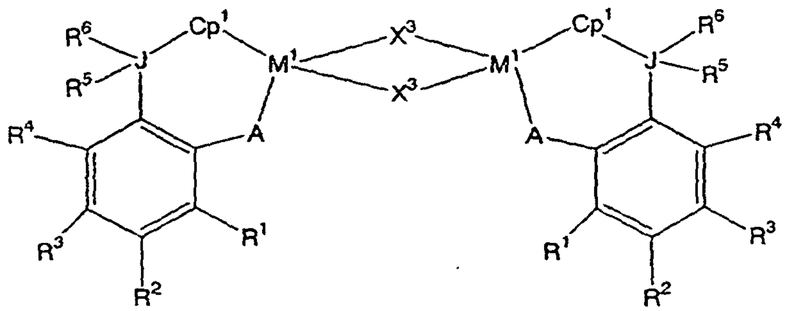

[III]

In the general formulas [I], [II] and [III], $M^1$ represents a transition metal atom of Group 4 of the Periodic Table of Elements, A represents an atom of Group 16 of the Periodic Table of Elements, J represents an atom of Group 14 of the Periodic Table of Elements, and $Cp^1$ represents a group having a cyclopentadiene-type anion skeleton. $X^1$, $X^2$, $R^1$, $R^2$, $R^3$, $R^4$, $R^5$ and $R^6$ independently represent a hydrogen atom, a halogen atom, an alkyl group, an aralkyl group, an aryl group, a substituted silyl group, an alkoxy group, an aralkyloxy group, an aryloxy group or a di-substituted amino group. $X^3$ represents an atom of Group 16 of the Periodic Table of Elements. $R^1$, $R^2$, $R^3$, $R^4$, $R^5$ and $R^6$ may arbitrarily be combined to form a ring. The two $M^1$s, As, Js, $Cp^1$s, $X^1$s, $X^2$s, $X^3$s, $R^1$s, $R^2$s, $R^3$s, $R^4$s, $R^5$s or $R^6$s in the general formula [II] or [III] may be either the same or different.

(C): At least one aluminum compound selected from the following (C1) to (C3):

(C1) An organoaluminum compound represented by the general formula $E1_aAlZ_{3-a}$
(C2) A cyclic aluminoxane having a structure represented by the general formula $\{-Al(E^2)-O-\}_b$
(C3) A linear aluminoxane having a structure represented by the general formula $E^3\{—Al(E^3)—O—\}_cAlE^3{}_2$

In the above general formulas, $E^1$, $E^2$ and $E^3$ each indicates a hydrocarbon group, and all $E^1$s, all $E^2$s and all $E^3$s may be either the same or different. Z represents a hydrogen atom or a halogen atom and all Zs may be either the same or different. The character "a" represents a number satisfying 0 < a s 3, b represents an integer not smaller than 2, and c represents an integer not smaller than 1.

(D): A boron compound selected from the following (D1) to (D3):

(D1) A boron compound represented by the general formula $BQ^1Q^2Q^3$
(D2) A boron compound represented by the general formula $G^+(BQ^1Q^2Q^3Q^4)$-
(D3) A boron compound represented by the general formula $(L\text{-}H)^+(BQ^1Q^2Q^3Q^4)^-$

In the general formulas, B represents a trivalent boron atom, $Q^1$ to $Q^4$ each represents a halogen atom, a hydrocarbon group, a halogenated hydrocarbon group, a substituted silyl group, an alkoxy group or a di-substituted amino group and may be either the same or different, $G^+$ is an inorganic or organic cation, L is a neutral Lewis base, and $(L\text{-}H)^+$ is a Brensted acid.

(B) Transition metal complex

The transition metal complex represented by the general formula [I] may be prepared, for example, by the method disclosed in WO97/03992-A. The transition metal complexes represented by the general formulas [II] and [III], respectively, may be prepared by reacting the transition metal complex represented by the general formula [I] with water in an amounts of 0.5 molar time and 1 molar time that of the transition metal complex [I]. In their preparation, there may be applied, for example, a method wherein the transition metal complex represented by the general formula [I] is directly reacted with a required amount of water and a method wherein the transition metal complex represented by the general formula [I] is put into a dry solvent such as hydrocarbons and is further passed through an inert gas and the like containing a required amount of water.

(C) Aluminum compound

Examples of the aluminum compound (C) include triethylaluminum, triisobutylaluminum, methylaluminoxane and other alkylalmoxanes.

(D) Boron compound

Examples of the boron compound (D) include triphenylmethyl tetrakis(pentafluorophenyl)borate, tri(n-butyl) ammonium tetrakis(pentafluorophenyl)borate and N,N-dimethylanilinium tetrakis(pentafluorophenyl)borate.

The ethylene $\alpha$-olefin alkenyl aromatic hydrocarbon copolymer may be obtained by using an olefin-polymerizing catalyst prepared from the transition metal complex (B) and the (C) and/or the (D). When an olefin-polymerization catalyst prepared from the two components, (B) and (C), the cyclic aluminoxane (C2) and/or the linear aluminoxane (C3) are preferable as the (C). Other preferable olefin-polymerization catalysts include ones prepared from the (B), the (C) and the (D). In this case, the (C1) is readily used as the (C).

As for the amount of these components to be used, it is usually preferable that each component is used so that a molar ratio (C)/(B) is in the range of from 0.1 to 10000, preferably from 5 to 2000 and a molar ratio (D)/(B) is in the range of from 0.01 to 100, preferably from 0.5 to 10.

In the thin layer body of the present invention, a layer composed of the copolymer (A) may contain a thermoplastic resin other than the copolymer (A) depending on the application of this thin layer body. As the thermoplastic resin other than the copolymer (A), an olefin-based resin is preferable, and examples of this olefin-based resin include $\alpha$-olefin homopolymers such as polyethylene and polypropylene; ethylene/$\alpha$-olefin copolymers mainly composed of an $\alpha$-olefin such as an ethylene/propylene copolymer, ethylene/butene-1 copolymer, ethylene/4-methyl-1-pentene copolymer, ethylene/1-hexane copolymer and ethylene/1-octene copolymer; further, ethylene/polar vinyl monomer copolymers such as ethylene/vinyl acetate copolymer, ethylene/acrylic acid copolymer, ethylene/methyl methacrylate copolymer, ethylene/vinyl acetate/methyl methacrylate copolymer and ionomer resin.

Among these olefin-based resins, ethylene/polar vinyl monomer copolymers such as low density polyethylene, ethylene/$\alpha$-olefin copolymer and ethylene/vinyl acetate copolymer are preferable from the veiwpoints of excellent transparency, flexibility and cost. Among the ethylene/polar vinyl monomer copolymers, an ethylene/vinyl acetate copolymer comprising not greater than 30 wt% of a unit of vinylacetate is preferable since flexibility thereof is excellent and formation of wrinkle in extending a film is suppressed. An ethylene/$\alpha$-olefin copolymer, particularly that having narrow composition distribution and molecular weight distribution polymerized using e.g. a metallocene catalyst, is preferable due to excellent mechanical strength and transparency.

Further, the thin layer body of the present invention may have a layer composed of the other material than the copolymer (A) depending on the application thereof. As the layer composed of the other material than the copolymer (A), layers composed of olefin-based resins other than the copolymer (A), and the like are listed. As the olefin-based resin other than the copolymer (A), the same examples as listed above are exemplified.

The thin layer body of the present invention has excellent radiation blocking property since it has a layer (layer E) composed of the copolymer (A) having excellent radiation blocking property, and the thin layer body may get further excellent radiation blocking property by further inclusion of a radiation blocking agent.

The thin layer body of the present invention may contain the inorganic compound particle as an inorganic compound, if needed. The inorganic compound particle is the so-called "functional inorganic compound particle" which can exhibit its intrinsic function when it is mixed with the copolymer (A). The function is optional and may be selected depending on the application of the thin layer body and may be e. g. a radiation-shieldin function, an ultraviolet-shielding function, a reinforcing function, a function of increasing quantity, an anti-blocking function, a function of providing lubricating property, a gas barrier property or a function of providing easy-tearability. Therefore, the thin layer body of the present invention is a composition which possesses a function exhibited by such an inorganic compound particle and which is excellent in transparency. The inorganic compound particle preferably has a volume-based average particle

diameter of not greater than 10 μm. When the volume-based average particle diameter exceeds 10 μm, the decrease in the transparency of the thin layer body becomes apparent even if the copolymer of ethylene and/or an α-olefin and alkenyl aromatic hydrocarbon is used as an olefin-based resin. In the present invention, the volume-based average particle diameter of the inorganic compound particle is more preferably from 0.05 to 5 μm, still more preferably from 0.1 to 3 μm, and particularly preferably from 0.2 to 1 μm. In the present invention, the volume-based average particle diameter of the inorganic compound particle means an average particle diameter of the inorganic compound particle in accordance with particle size distribution based on its volume, and is indicated by a value which is obtained by means of a scattering particle size analyzer (manufactured by Horiba Seisakusho Corp., Model LA-910) and which is measured in a manner wherein a 1% aqueous dispersion of a sample is placed into a batch cell and then subjected to ultrasonic treatment for 3 minutes. Further, the specific surface area of the inorganic compound particle measured by the BET method is preferably from 1 to 30 $m^2/g$, more preferably from 2 to 20 $m^2/g$. The inorganic compound particle may be surface treated with higher fatty acids, alkali metal salts of higher fatty acids or the like for the purpose of improvement in its dispersibility in the thin layer body.

A refraction index difference ($\Delta$ n) between the inorganic compound particle and the copolymer (A) is preferably $-0.1 < \Delta n < 0.1$, more preferably $-0.05 \Delta n < 0.05$, still more preferably $-0.02 < \Delta n < 0.02$, and particularly preferably $-0.01 < \Delta n < 0.01$. The transparency of the thin layer body is improved as $\Delta$ n approaches zero. The refraction index of the copolymer (A) may be adjusted by, for example, varying the monomer composition of the copolymer. In general, when the proportion of ethylene and/or the α-olefin increases, the refraction index becomes smaller. On the other hand, when the proportion of the alkenyl aromatic hydrocarbon is increased, the refraction index becomes greater. Varying the monomer composition of the copolymer (A) may change the refraction index difference ($\Delta$ n) between the copolymer and the inorganic compound particle, and may also bring the $\Delta$ n close to zero.

As for the inorganic compound particle in the thin layer body of the present invention, the type thereof may be optionally selected depending on the application of the thin layer body and the function which the thin layer body is required to have.

For example, in compositions for covering films of e.g. agricultural houses, an inorganic compound particle comprising at least one atom selected from Si, Al, Mg, Ca, Zn, Ti, Ce and Zr is preferably selected. Oxides and hydroxides containing these atoms and complex compounds represented by the following general formulas [I] - [V] may be used as an inorganic compound for the inorganic compound particle.

Specific examples of the inorganic compound include oxides such as magnesium oxide, calcium oxide, aluminum oxide, silicon oxide, titanium oxide, zirconium oxide, cerium oxide and zinc oxide; hydroxides such as lithium hydroxide, magnesium hydroxide, calcium hydroxide and aluminum oxide; complex hydroxides such as lithium aluminum complex hydroxide and hydrotalcite compounds; carbonates such as magnesium carbonate and calcium carbonate; sulfates such as potassium sulfate, magnesium sulfate, calcium sulfate, zinc sulfate and aluminum sulfate; phosphates such as lithium phosphate, sodium phosphate, potassium phosphate and calcium phosphate; silicates such as magnesium silicate, calcium silicate, aluminum silicate and titanium silicate; aluminates such as sodium aluminate, potassium aluminate and calcium aluminate; aluminosilicates such as sodium aluminosilicate, potassium aluminosilicate and calcium aluminosilicate (for example, particle of alumina silica; trade name: Silton JC30, manufactured by Mizusawa Industrial Chemicals, Ltd.; volume-based average particle diameter = 3 μm; specific surface area measured by the BET method = 18 $m^2/g$; Sodium calcium alumino silicate); clay minerals such as kaolin, clay, talc (for example, particle of talc: trade name: Micronwhite 5000S; volume-based average particle diameter = 5 μm; specific surface area measured by the BET method = 15 $m^2/g$; $Mg_3SiO_{10}(OH_2)$, mica and montmorillonite; and complex oxides. These may be used either alone or in combination of two or more of them.

In particular, in the thin layer body for covering films which is excellent in the heat-retaining property (the radiation-shielding property), an inorganic compound comprising at least one atom selected from Si, Al, Mg, Ca and Zn is preferably used. Particularly preferred are aluminosilicates and complex hydroxides such as hydrotalcite compounds and lithium aluminum complex hydroxide, which exhibit absorbing abilities in wide wavelength ranges.

The hydrotalcite compounds are compounds represented by the following formula (I):

$$M^{2+}{}_{(1-x)}Al^{3+}{}_{x}(OH^{-})_2(A_1{}^{n-})_{x/n}\cdot mH_2O \qquad (I)$$

wherein $M^{2+}$ is a divalent metal ion, $A_1{}^{n-}$ is an n-valent anion, and x, m and n satisfy conditions of $0<x<0.5$, $0\leq m\leq 2$ and $1\leq n$. The $M^{2+}$ may be $Mg^{2+}$, $Ca^{2+}$, $Zn^{2+}$ and the like. The n-valent anion is not particularly limited and may be anions such as $Cl^-$, $Br^-$, $I^-$, $NO_3{}^-$, $ClO_4{}^-$, $SO_4{}^{2-}$, $CO_3{}^{2-}$, $SiO_s{}^{2-}$, $HPO_4{}^{3-}$, $HBO_4$3-, Pro43-, $Fe(CN)_6{}^{3-}$, $Fe(CN)_6{}^{4-}$, $CH_3COO$-, $C_6H_4(OH)COO$-, $(COO)_2{}^{2-}$, a terephthalate ion and a naphthalenesulfonate ion, and a polysilicate ion and a polyphosphate ion which are disclosed in JP-A-8-217912,

Typically, examples thereof include natural hydrotalcite and synthetic hydrotalcite such as DHT-4A (trade name, manufactured by Kyowa Chemical Industries, Ltd.)

The hydrotalcite compounds may be used together with calcium aluminum complex hydroxide, $CaAl_x(OH)_{(2+3x)}$,

or calcium hydroxide.

Examples of the Lithium aluminum complex hydroxides include compounds which are disclosed in JP-A-5-179052 and which are represented by the following formula (II):

$$Li^+(Al^{3+})_2(OH^-)_6 \cdot (A_2^{n-})_{1/n} \cdot mH_2O \qquad (II)$$

wherein $A_2^{n-}$ is an n-valent anion, and m and n satisfy conditions of 0≤m≤3 and 1≤n. The n-valent anion is not particularly limited and may be anions similar to $A_1^{n-}$ in the compounds of formula (I).

Complex hydroxides other than the above-mentioned two kinds may be, for example, complex hydroxides which have a hydroxyl group and which contain Li, Al and at least one element selected from alkaline earth metals, transition metals, Zn and Si. Among the alkaline earth metals, Mg and Ca are preferred. Among the transition metals, di-or trivalent Fe, Co, Ni and Mn, particularly Fe, are preferred. The molar ratio of Al to Li (Al/Li) is usually from 1.5/1 to 2.5/1, preferably from 1.8/1 to 2.5/1.

The molar ratio (a), based on one mole of Li, of the element selected from alkaline earth metals, transition metals, Zn and Si usually satisfies 0<a<1.5, preferably 0.1≤a≤1.4, more preferably 0.2≤a≤1.2.

The anionic part other than a hydroxyl group in such complex hydroxides may be, for example, polysilicate ions such as a pyrosilicate ion, a cyclosilicate ion, an isosilicate ion, a phillosilicate ion, a tectsilicate ion; inorganic acid ion such as a carbonate ion, a halide ion, a sulfate ion, a sulfite ion, a nitrate ion, a nitrite ion, a phosphate ion, a phosphite ion, a hypophosphite ion, a polyphosphate ion, an aluminate ion, a silicate ion, a perchlorate ion and a borate ion; anionic transition metal complexes such as $Fe(CN)_6^{3-}$ and $Fe(CN)_6^{4-}$; organic acid ions such as an acetate ion, a benzoate ion, a formate ion, a terephthalate ion and an alkylsulfonate ion. Among them, the carbonate ion, the halide ion, the sulfate ion, the phosphate ion, the polyphosphate ion, the silicate ion, the polysilicate ions and the perchlorate ion are preferred. Particularly preferred are the carbonate ion, the polyphosphate ion, the silicate ion and the polysilicate ions.

Typically, examples of such complex hydroxides include a complex hydroxide which contains Al, Li and Mg and which has a molar ratio (Al/Li/Mg) of about 2.3/1/0.28 (trade name: LMA, manufactured by Fuji Chemical Co., Ltd.) and a complex hydroxide which contains Al, Li and Si and which has a molar ratio (Al/Li/Si) of about 2/1/1.2 (trade name : FUJIREIN LS, manufactured by Fuji Chemical Co., Ltd.; volume-based average particle diameter = 0.9 μm; specific surface area measured by the BET method = 9 $m^2/g$).

Compounds which are disclosed in WO97/00828 and are represented by formula (III):

$$[(Li+_{(1-x)}M^{2+}{}_x)(Al^{3+})_2(OH-)_6]_2(Si_yO_{(2y+1)}{}^{2-})_{(1+x)} \cdot mH_2O \qquad (III)$$

wherein $M^{2+}$ is a divalent metal and m, x and y satisfy conditions of 0≤m<5, 0≤x<1 and 2≤y≤4, and compounds which are disclosed in JP-A-8-217912 and are represented by formula (IV):

$$[(Li^+{}_{(1-x)}M^{2+}{}_x)(Al^{3+})_2(OH^-)_6]_2(A^{n-})_{2(1+x)/n} \cdot mH_2O \qquad (IV)$$

wherein $M^{2+}$ is a divalent metal, An- is an n-valent anion and m, x and n satisfy conditions of 0≤m<5, 0.01≤x<1 and 1≤n are preferable examples of the complex oxide described above. The $M^{2+}$ in formulas (III) and (IV) may be $Mg^{2+}$, $Ca^{2+}$, $Zn^{2+}$ and the like.

Further, a basic aluminum carbonate complex salt represented by formula (V):

$$mAl_2O_3 \cdot (n/p)M_{2/p}O \cdot X \cdot kH_2O \qquad (V)$$

wherein X is a carbonate anion, M is an alkali metal or an alkaline earth metal, p is a valence number of the metal M, and m, n and k satisfy conditions of 0.3≤m≤1, 0.3≤n≤2 and 0.5≤k≤4, may also be preferably used as the inorganic compound particle in the present invention.

A complex salt represented by formula (V) wherein X is an inorganic anion derived, for example, from an oxyacid of sulfur such as sulfuric acid and sulfurous acid, an oxyacid of nitrogen such as nitric acid and nitrous acid, hydrochloric acid, an oxyacid of chlorine such as perchloric acid, an oxyacid of phosphorous such as phosphoric acid, phosphorous acid and metaphosphoric acid, or an organic ion derived, for example, from acetic acid, propionic acid, adipic acid, benzoic acid, phthalic acid, terephthalic acid, maleic acid, fumaric acid, succinic acid, p-oxybenzoic acid, salicylic acid, picric acid and toluenesulfonic acid may be used together with the above-mentioned basic aluminum carbonate complex salt.

There is no particular limitation in the content of the inorganic compound particle in the thin layer body of the present invention when the thin layer body of the present invention contains the inorganic compound particle. The content may optionally be selected so that performance depending on the application of the thin layer body can be secured. The

thin layer body of the present invention has transparency superior to that of the other and conventional olefin-based resin composition which contains the same inorganic compound particle in the same amount as thin layer body of the present invention. Typically, examples of the content of the inorganic compound particle in the olefin-based resin composition of the present invention may include from 1 to 400 parts by weight of the inorganic compound particle per 100 parts by weight of the copolymer (A). In particular, it is the noteworthy feature of thin layer body of the present invention that the thin layer body can maintain its excellent transparency even if it contains from 10 to 400 parts by weight of the inorganic compound particle per 100 parts by weight of the copolymer (A). The known thin layer body comprising a certain kind of inorganic compound and an olefin-based resin such as an ethylene/vinyl acetate copolymer has poor transparency even if it contains less than 10 parts by weight of the inorganic compound per 100 parts by weight of the resin. Contrary to this, since the thin layer body of the present invention comprises the copolymer (A) of ethylene/ α-olefin alkenyl aromatic hydrocarbon, it has excellent transparency even if it contains not less than 10 parts by weight, or even not less than 20 parts by weight of the inorganic compound particle per 100 parts by weight of the copolymer (A). In such a case, it is important that an inorganic compound is composed of a fine particle previously described in addition to the combination of the copolymer (A) and an inorganic compound. For example, the inorganic compound particle has a volume-based average particle diameter of not greater than 10 μm. In addition to this, when a specific surface area of the inorganic compound particle measured by the BET method is from 1 to 30 $m^2/g$, a better effect can be obtained.

The composition of the thin layer body of the present invention may be prepared in the same procedure as that for producing the other and conventional resin compositions, which comprises the steps of adding a predetermined amount of the inorganic compound particle to the copolymer (A), further adding, as necessary, various kinds of supplementary additional ingredients, and mixing and kneading the mixture in a mixing and kneading machine such as a ribbon blender, a super mixer, a Banbury mixer and a single or double screw extruder.

Into the thin layer body of the present invention, particularly the agricultural covering films may be incorporated light stabilizers in order to improve weatherability of the films. Among the light stabilizers, a hindered amine compound is preferred. Preferable examples of the hindered amine compound include ones having structural formulas disclosed in JP-A-8-73667. Typically, examples thereof include ones available under the trade names of Tinuvin 622-LD, Chimasorb 944-LD, Hostavin N30, VP Sanduvor PR-31 and Tinuvin 123. These hindered amine compounds may be used either alone or in combination of two or more of them. Examples of a hindered amine compound-containing light stabilizer include compositions disclosed in JP-A-63-286448 (for example, ones available from Ciba Specialty Chemicals Corp. under the trade names of Tinuvin 492 and Tinuvin 494).

When a hindered amine compound is incorporated in the thin layer body, its amount, based on the weight of the thin layer body, is usually in the range of from 0.02 to 5 % by weight, preferably from 0.01 to 2 % by weight, still more preferably from 0.5 to 2 % by weight from the viewpoints of both an effect on improvement of weatherability and suppression of blooming. When the light stabilizer is incorporated in a thin multi-layer body, it may be incorporated in any layer of the thin multi-layer body. When it is incorporated in two or more layers, each layer may contain it either in the same amount or in different amounts. From the viewpoint of the effect on improvement of weatherability, the light stabilizer is preferably used together with an ultraviolet absorber which is described below.

Into the thin layer body, particularly an agricultural covering film, may be incorporated an ultraviolet absorber for the same purpose as that for the incorporation of the above-mentioned light stabilizer. Examples of the ultraviolet absorber include organic ultraviolet absorbers such a benzophenone-type ultraviolet absorber, a benzotriazole-type ultraviolet absorber, a benzoate-type ultraviolet absorber and a cyanoacrylate-type ultraviolet absorber, and inorganic ultraviolet absorbers including metal oxides, which are available, for example, from Nippon Inorganic Color & Chemical Co., Ltd. under the trade name of Ceriguard, such as cerium oxide, titanium oxide and zinc oxide. These ultraviolet absorbers may be used either alone or in combination of two or more of them.

When the ultraviolet absorber is incorporated in the thin layer body, the amount thereof, based on the weight of the thin layer body, is usually in the range of from 0.01 to 3% by weight, preferably from 0.05 to 1% by weight from the viewpoint of both an effect on improvement of weatherability and suppression of blooming. When it is incorporated in two or more layers, each layer may contain it either in the same amount or in different amounts.

Into the thin layer body, particularly an agricultural covering film, may be incorporated an anti-sticking agent in order to provide an anti-sticking property to the thin layer body. When the anti-sticking agent is incorporated, its amount is usually from 0.1 to 4% by weight, preferably from 0.5 to 3% by weight, still more preferably from 1.5 to 3% by weight, particularly preferably from 2.2 to 2.8% by weight, based on the weight of the thin layer body. In the case of a thin multi-layer body, the anti-sticking agent may be incorporated in any layer. When it is incorporated in two or more layers, each layer may contain it either in the same amount or in different amounts.

Such an anti-sticking agent may be either solid or liquid at an ordinary temperature (23°C). The solid anti-sticking agent may be nonionic surfactants including sorbitan fatty acid ester-based surfactants such as sorbitan monostearate, sorbitan monopalmitate, sorbitan monobehenate and sorbitan monomontanate; glycerol fatty acid ester-based surfactants such as glycerol monolaurate, glycerol monopalmitate, glycerol monostearate, diglycerol distearate, triglycerol monostearate and triglycerol monomontanate; polyethylene glycol-based surfactants such as polyethylene glycol monopalmitate and polyethylene glycol monostearate; adducts of alkylene oxide to alkylphenol; organic acid esters of sorbitan/glycerol condensation products; amine-based surfactants including polyoxyethylene alkylamine compounds such as polyoxyethylene (2 mol) stearylamine, polyoxyethylene (2 mol) laurylamine and polyoxyethylene (4 mol) stearylamine ; fatty acid esters of polyoxyethylene alkylalmines such as polyoxyethylene (2 mol) stearylamine monostearate, polyoxyethylene (2 mol) stearylamine distearate, polyoxyethylene (4 mol) stearylamine monostearate, polyoxyethylene (4 mol) stearylamine distearate, polyoxyethylene (8 mol) stearylamine monostearate, polyoxyethylene (2 mol) stearylamine monobehenate and polyoxyethylene (2 mol) laurylamine stearate; and fatty acid amides of polyoxyethylene alkylamine compounds such as polyoxyethylene (2 mol) stearic acid amide.

Further, since the incorporation, into the thin layer body, of an anti-sticking agent which is in a liquid state at an ordinary temperature may prevent the thin layer body from being deteriorated in its light permeability during its storage or extension, the incorporation of at least one kind of anti-sticking agent which is in the liquid state at an ordinary temperature is effective.

Examples of the anti-sticking agent which is in the liquid state include glycerol fatty acid esters such as glycerol monooleate, diglycerol monooleate, diglycerol sesquioleate, tetraglycerol monooleate, hexaglycerol monooleate, tetraglycerol trioleate, hexaglycerol pentaoleate, tetraglycerol monolaurate and hexaglycerol monolaurate; and sorbitan fatty acid esters such as sorbitan monooleate, sorbitan dioleate and sorbitan monolaurate. When such a liquid anti-sticking agent is incorporated to a thin layer body, its amount is usually in the range of from 0.2 to 3% by weight, preferably from 0.5 to 2% by weight, based on the weight of the thin layer body.

In addition, an anti-fogging agent may further be incorporated in the thin layer body (the base film) in order to provide an anti-fogging property to the thin layer body. Examples of the anti-fogging agent include fluorine compounds having a perfluoroalkyl group, a ω-hydrofluoroalkyl group or the like (particularly, fluorine-containing surfactants) and silicone-type compounds having an alkylsiloxane group (particularly silicone-type surfactants). When the anti-fogging agent is incorporated in the thin layer body, its amount is usually in the range of from 0.01 to 3% by weight, preferably from 0.02 to 1% by weight, based on the weight of the thin layer body. When the anti-fogging agent is incorporated in a thin multi-layer body, the anti-fogging agent may be incorporated in any layer of the thin multi-layer body. When it is incorporated in two or more layers, each layer may contain it either in the same amount or in different amounts.

Furthermore, a near-infrared shielding agent may be incorporated in the thin layer body, particularly agricultural covering film, in order to lower the temperature inside the house in the daytime in a hot season. Such near-infrared shielding agents may be, for example, organic compounds disclosed in JP-A-10-193522, e.g., nitroso compounds and their metal complexes, cyanine-type compounds, squarrium-type compounds, thiol-nickel complex salt-type compounds, phthalocyanine-type compounds, triallylmethane-type compounds, imonium-type compounds, diimonium-type compounds, naphthoquinone-type compounds, anthraquinone-type compounds, amino compounds and aminium salt-type compounds; and inorganic compounds such as carbon black, antimony oxide, tin oxide doped with indium oxide, oxides and carbonates of metals of the group 4A, 5A or 6A of the periodic table of the elements, and boron compounds. When the near-infrared shielding agent is an inorganic compound or an organic pigment, the transparency of the thin layer body may be improved by reduction in a refraction index difference between the near-infrared shielding agent and the resin.

The additives mentioned above may be used either alone or in combination of two or more of them. When these additives are incorporated in a thin multi-layer body, they may be incorporated in any layer of the thin multi-layer body. When they are incorporated in two or more layers, each layer may contain them either in the same amount or in different amounts.

The thin layer body of the present invention may appropriately comprise auxiliary additives usually used in the field of a resin composition, for example, an antioxidant, heat stabilizer, light stabilizer, dispersing agent, lubricant, anti-blocking agent, pigment, coloring agent, anti-fogging agent, antistatic agent, ultraviolet ray absorber or dust proofing agent, in an amount within the range wherein abilities depending on the application of the thin layer body are secured. Various auxiliary additives may be used alone or in combination of two or more.

The thin layer body of the present invention, particularly the agricultural covering film, may comprise an organic infrared ray absorbing agent such as polyacetal, polyvinyl alcohol and derivatives thereof and ethylene/vinyl alcohol copolymer.

The thin layer body of the present invention, particularly the agricultural covering film, may comprise a lubricant and/or anti-blocking agent for imparting anti-blocking property, dust proofing property and antifriction breaking property. Co-use thereof is particularly effective.

As the lubricant, there may be preferably used, for example, an fatty amide compound having a melting point of 50 to 200°C. Examples of the fatty amide compound include saturated fatty amide, unsaturated fatty amide and bisfatty amide. Typically, examples thereof include behenic amide, stearic amide, palmitic amide, lauric amide, erucic amide, oleic amide, methylenebisstearic amide, methylenebisbehenic amide, methylenebisoleic amide, ethylene bisstearic amide, ethylene bisbehenic amide, ethylene bisoleic amide, hexamethylene bisstearic amide, hexamethylene bisbehenic

amide, hexamethylene bisoleic amide and octamethylene biserucic amide.

When a lubricant is compounded, the compound amount thereof is preferably 0.01 wt% or more, more preferably 0.03 wt% or more based on the weight of the thin layer body. Further, from the economical viewpoint, it is preferably 1 wt% or less, more preferably 0.5 wt% or less.

As the anti-blocking agent, there may be used, for example, an organic fine particle or inorganic fine powder. As the organic fine particle, cross-linked polymers having a particle size of 0.5 to 20 μm are exemplified, and there is preferably used a cross-linked bead such as, for example, polyethylene and polymethyl methacrylate. As the inorganic fine particle, the inorganic fine particles used as a radiation blocking agent aforementioned are exemplified.

When an organic fine particle is compounded, the content thereof is preferably 0.01 wt% or more, more preferably 0.05 wt% or more, particularly preferably 0.1 wt% or more based on the weight of a thin layer body. Further from the economical viewpoint, it is preferably 20 wt% or less, more preferably 10 wt% or less, particularly preferably 5 wt% or less. When an inorganic fine particle is compounded, the content thereof is same as that of the above organic fine particle.

In order to maintain the transparency of the thin layer body for a long period of time, an anti-fogging coat may be further provided at least on the inner surface of the thin layer body which is the surface which face the inside of e.g. a house. Such an anti-fogging coat, may be, for example, a coating film comprising an inorganic oxide sol such as colloidal silica and colloidal alumina, coating film formed from liquid mainly comprising a surfactant and a coating film formed from liquid comprising a hydrophilic resin, and a coating film being mainly composed of the hydrophilic resin. Examples of the hydrophilic resin include polyvinyl alcohol, polysaccharide and polyacrylic acid. The method for coating may be either a so-called coating method or a method wherein a film being mainly composed of the hydrophilic resin is formed, and then it is laminated on the surface of the thin layer body.

On the surface of the thin layer body of the present invention, particularly, agricultural covering film, a coat composed of a near infrared ray blocking agent may be formed. As the method for coating, there may be, for example, a method wherein a coating solution comprising a near infrared ray blocking agent and a water-soluble resin binder is applied on the thin layer body and dried.

In the thin layer body of the present invention, particularly agricultural covering film, dust proofing treatment may be performed on the outer surface of the thin layer body, which is the surface which will face the outer side of e.g. a house, and repellant treatment and anti-fogging treatment may be performed on the inner surface of the thin layer body, which is the surface which will face the inner side of e.g. a house.

When the thin layer body of the present invention is an agricultural covering film, the thickness thereof is usually from 0.01 to 1 mm, preferably from 0.02 to 0.4 mm, particularly, more preferably from 0.03 to 0.2 mm from the viewpoints of strength, boom processability and covering workability.

Two or more layers are formed comprising a layer other than the layer (layer E) composed of the copolymer (A). The thickness of the layer E (when two or more layers E are present, the total thickness thereof) is usually from 10 to 90% of the thickness of the thin layer body, and preferably from 10 to 80% from the viewpoint of molding property of the thin layer body, and more preferably from 20 to 80% from the viewpoint of transparency and strength. Furthermore, the number of layers is not particularly limited, and two or more is preferable, further, three or more, and four, five, six, seven layers are also preferable. The position of the layer E in the thin multi-layer body is an intermediate layer. The thickness of each layer in the multi-layer body may be the same or different.

The thin layer body of the present invention, particularly the agricultural covering film, may be produced by preparing resin materials for respective layers by using a mixing and kneading machine such as a ribbon blender, super mixer, banbury mixer, single axis or twin axis extruder and the like, and by molding the respective materials into a thin layer body by a T die film molding method or inflation molding method in coextrusion mode.

The thin layer body of the present invention has excellent transparency and radiation blocking property, and is useful as a covering film, used for e.g. a house, tunnel, curtain or mulching in agriculture Further, the thin layer body of the present invention is also excellent in impact resistance.

## EXAMPLES

Examples of the present invention will be shown below, but the invention is not limited by the examples. All parts and percentages in the examples and comparative examples are by weight unless explicitly stated otherwise.

Testing methods used in the examples and comparative examples are as follows:

(1) Density of resin

A density of a resin was measured by the method provided in JIS K6760.

(2) Melt flow rate of resin

A melt flow rate of a resin material was measured by the method provided in JIS K6760. Measuring conditions included a load of 2.16 kg and a temperature of 190°C.

(3) Crystallinity of resin

A sample was heated at a heating rate of 10°C/minute by means of a differential scanning calorimeter (manufactured by Seiko Instruments Inc., model: DSC-220). An endothermic curve (a DSC chart) was recorded and the presence of a peak was checked.

(4) Internal haze

An internal haze, which is a measure of transparency, was determined by means of a digital haze meter (manufactured by Suga Test Instruments Co., Ltd.). The internal haze was obtained by filling a quarts cell with a solution of dimethyl phthalate, immersing a sample film therein and measuring a haze of the entire cell.

(5) Heat-retaining property (Radiation-shielding property)

[Radiation transmitting index]

The radiation transmitting index at 23°C was determined by the following method by means of an infrared spectrophotometer (Model 1640 FTIR, manufactured by Perkin-Elmer Corp.)
Measurement of the infrared spectrum of a film (100 μm thick) was conducted in the wavenumber range of from 400 to 4000 $cm^{-1}$ at 23°C by a transmission method, providing a transmittance, T(ν)%, at a wavenumber, ν.
On the other hand, an intensity, e(ν), of a black body radiation spectrum at the wavenumber of ν at 23°C was calculated in accordance with the following formula (3) derived from the Planck's law. The product of the intensity, e(ν), of the black-body radiation spectrum and the transmittance, T(ν), is a black-body transmitting intensity, f(ν). See formula (4).
A radiation transmitting energy, F, is calculated by integration of the radiation transmitting intensity, f(ν), in the wavenumber range of from 400 to 4000 $cm^{-1}$. A black-body radiation energy, E, is calculated by integration of the intensity, e(ν), of the black-body radiation spectrum in the wavenumber range of from 400 to 4000 $cm^{-1}$. The radiation transmitting index, G, is defined by the formula: $G = 100 \times F / E$. In an actual integration, the above-mentioned wavenumber range was divided into ranges 2 $cm^{-1}$ wide and the integration was carried out for each divided range by trapezoid approximation. The smaller the radiation transmitting index, the better the heat retaining property of the film.

$$e(\nu) = (A/\lambda^5) / \{\exp(B/(\lambda \times T)) - 1\} \qquad (3)$$

In the formula (3),
A (first radiation constant) = $2\pi hC^2 = 3.74 \times 10^{-16}$ ($W \cdot m^2$)
B (second radiation constant) = hC / k = 0.01439 (m·K)
wherein T (K) is an absolute temperature, λ (cm) is a wavelength whose reciprocal is a wavenumber ν, h is the Planck's constant, C is the speed of light and k is the Boltzmann's constant.

$$f(\nu) = e(\nu) \times T(\nu) / 100 \qquad (4)$$

Example 1 (Reference example)

[Preparation of copolymer (A)]

Into a 5000 ml autoclave, the inside of which had been replaced with argon, 3500 ml of styrene and 1650 ml of dehydrated hexane were placed, and then 1.2 MPa of ethylene was fed. To the mixture, 2.0 ml of a heptane solution of triisobutylaluminum (manufactured by Toso-Aczo Corp., 1 mol/liter), and a mixture prepared by dissolving 4.6 mg of isopropylidene(cyclopentadienyl)(3-tert-butyl-5-methyl-2-phenoxy)titanium dichloride in 6 ml of dehydrated toluene, a

mixture prepared by dissolving 22.4 mg of N,N-dimethylaniliniumtetrakis(pentafluorophenyl) borate in 28 ml of dehydrated toluene were added. The reaction solution was stirred at 60°C for 1 hour. Next, the reaction solution was poured into a mixture of 15 ml of hydrochloric acid (12 N) and 3000 ml of methanol, and then a white solid precipitated was collected by filtration. The solid was washed with methanol, and dried under reduced pressure to obtain 100.4 g of an ethylene/ styrene copolymer. The copolymer had a volume-based average molecular weight of 297,000, a molecular weight distribution (a weight-average molecular weight/a volume-based average molecular weight) of 2.21, a glass transition temperature of -10°C, and a styrene unit content of 26 mol%. A ratio of the area of the peak appearing in the range of from 34.0 to 36.0 ppm in a $^{13}C$-NMR spectrum to that of the peak appearing in the range of from 36.0 to 38.0 ppm was 0.06. A melting curve using a differential thermal analyzer (manufactured by Seiko Denshi Kogyo K.K., DSC220) at a temperature rising rate of 10°C/min., the melting point peak was not found, and the above-mentioned copolymer had substantially no crystallinity. The maximum value of the loss tangent (tan δ) of the above-mentioned copolymer was 1.40.

[Preparation of olefin-based resin composition and film formation]

To the ethylene/styrene copolymer obtained above, 0.1% of Irganox 1010 (manufactured by Chiba Specialty Chemicals) as a heat stabilized, 0.4% of Tinubin 622 (manufactured by Chiba Specialty Chemicals) as a hindered amine type compound, and 0.2% of Kimasorb (manufactured by Chiba Specialty Chemicals) were added. The mixture was kneaded in a Laboplastonaill at 150°C for 5 minutes. The resulting material was spread by means of a press to obtain a film having thickness of 100 μm.

Comparative Example 1

A film was made in the same manner as in Example 1 except for using a low density polyethylene (trade name: Sumikathene F208-1; density: 0.922 g/cm$^3$ melt index; 1.5 g/10 min,: manufactured by Sumitomo Chemical Co., Ltd.) instead of the copolymer used in Example 1.

The evaluation results of the resulting film are shown in Table 1. The film of Example 1 was excellent in transparency and radiation blocking property as compared with the film in Comparative Example 1.

Table 1

| | Example 1 | Comparative Example 1 |
|---|---|---|
| HAZE (%) | 2.5 | 11.6 |
| Radiation transmission factor | 52.7 | 73.9 |

(Reference Examples 1, 2 and 3)

A three-layer tube (substrate) composed of a first layer, a third layer and a second layer sandwiched between the first layer and third layer is obtained as follows. The first layer, the second layer and the third layer are, respectively, the inner layer, the intermediate layer and the outer layer of the tube. A composition of respective layers is as given in Table 2. Each value put in parentheses after a symbol indicating a kind of an ingredient is percentage of the amount of each ingredient based on the total amount of the ingredients contained in the layer in which the ingredient is present. First, ingredients to be contained in each layer are kneaded at 150°C for 5 minutes in a banbury mixer. Then, the mixtures are granulated by a granulator to obtain resin compositions for forming the layers in the form of pellets. A three-layer tube is formed by a three-layer inflation film machine using resin composition pellets or resin pellets for each layer so that the thickness of each layer becomes one given in Table 2 and 3. When the tube is cut along its logitudunal direction, a film which has excellent properties as an agriculture covering film is obtained.

Table 2

| Layer | | Reference Example 1 | Reference Example 2 | Reference Example 3 |
|---|---|---|---|---|
| First layer | Resin | A2/A3 [90/10 wt%] | A2/A3 [90/10 wt%] | A4 |
| | Heat stabilizer | E1 (0.05)/ E2 (0.15) | E1 (0.05)/ E2 (0.15) | E1 (0.05)/ E2 (0.15) |
| | Weather resistant agent | F1 (0.2)/ F2 (0.4) | F1 (0.2)/ F2 (0.4) | F1 (0.2)/ F2 (0.4) |
| | Ultraviolet absorber | G1 (0.24) | G1 (0.24) | G1 (0.24) |
| | Lubricant | K1 (0.06) | K1 (0.06) | K1 (0.06) |
| | Anti-fogging agent | I1(0.1) | I1(0.1) | I1(0.1) |
| | Anti-sticking agent | H1 (0.4)/ H2 (0.6) | H1 (0.4)/ H2 (0.6) | H1 (0.4)/ H2 (0.6) |
| | Layer thickness ($\mu$m) | 20 | 20 | 20 |
| Second layer | Resin | A1 | A1 | A1 |
| | Heat stabilizer | E3 (0.08)/ E4 (0.2) | E3 (0.08)/ E4 (0.2) | E3 (0.08)/ E4 (0.2) |
| | Weather resistant agent | F3 (0.6) | F4 (0.6) | F5 (0.6) |
| | Radiation blocking agent | J1 (12) | J1 (12) | J2 (12) |
| | Anti-fogging agent | I1 (0.1) | I1 (0.1) | I1 (0.1) |
| | Anti-sticking agent | H1 (1.0)/ H2 (1.5) | H1 (1.0)/ H2 (1.5) | H1 (1.0)/ H2 (1.5) |
| | Layer thickness ($\mu$m) | 60 | 60 | 60 |

Table 3

| Layer | | Reference Example 1 | Reference Example 2 | Reference Example 3 |
|---|---|---|---|---|
| Third layer | Resin | A2/A8 [90/10 wt%] | A5 | A5 |
| | Heat stabilizer | E1 (0.05)/ E2 (0.15) | E1 (0.05)/ E2 (0.15) | E1 (0.05)/ E2 (0.15) |
| | Weather resistant agent | F1 (0.2)/ F2 (0.4) | F1 (0.2)/ F2 (0.4) | F1 (0.2)/ F2 (0.4) |
| | Lubricant | K1 (0.06) | K1 (0.06) | K1 (0.06) |
| | Anti-fogging agent | I1 (0.1) | I1 (0.1) | I1 (0.1) |
| | Anti-sticking agent | H1 (0.4)/ H2 (0.6) | H1 (0.4)/ H2 (0.6) | H1 (0.4)/ H2 (0.6) |
| | Layer thickness ($\mu$m) | 20 | 20 | 20 |
| Total layer thickness ($\mu$m) | | 100 | 100 | 100 |

(Reference Examples 4, 5 and 6)

Three-layers tubes (substrate) were made in the same manner as in Reference Example 1 except that compositions of respective layers are as shown in Tables 4 and 5.

[Formation of anti-fogging layer]

Alumina sol (manufactured by Nissan Chemical Industries, Ltd., trade name: Alumina Sol 520; solid content=20%), colloidal silica (manufactured by Nissan Chemical Industries, Ltd., trade name: Snow Tex; solid content=20%), sodium dodecylbenzenesulfonate (manufactured by Kao Corp., trade name: Neopex F25) and sodium dodecanate (manufactured by Nakaraitesk) were mixed with adding water, so that the respective solid concentrations were 1.6%, 0.4%, 0.08% and 0.08%, to obtain a coating solution. This coating solution was applied on the surface of the third layer of a substrate on which corona treatment had been previously performed, so that the thickness of solid components was 0.2 g/m$^2$, and dried at room temperature to form a anti-cloudiong layer on the third layer. By this, a film having excellent properties as an agricultural covering film is obtained.

Table 4

| Layer | | Reference Example 4 | Reference Example 5 | Reference Example 6 |
|---|---|---|---|---|
| First layer | Resin | A2/A3 [90/10 wt%] | A2/A3 [90/10 wt%] | A4 |
| | Heat stabilizer | E1 (0.05) E2 (0.15) | E1 (0.05) E2 (0.15) | E1 (0.05) E2 (0.15) |
| | Weather resistant agent | F1 (0.2)/ F2 (0.4) | F1 (0.2)/ F2 (0.4) | F1 (0.2)/ F2 (0.4) |
| | Ultraviolet absorber | G1 (0.24) | G1 (0.24) | G1 (0.24) |
| | Lubricant | K1 (0.06) | K1 (0.06) | K1 (0.06) |
| | Layer thickness (μm) | 20 | 20 | 20 |
| Second layer | Resin | A1 | A1 | A1 |
| | Heat stabilizer | E2 (0.06) | E2 (0.06) | E2 (0.06) |
| | Weather resistant agent | F3 (0.6) | F1 (0.6) | F1 (0.6) |
| | Radiation blocking agent | J1 (12) | J3 (12) | J3 (12) |
| | Layer thickness (μm) | 60 | 60 | 60 |

Table 5

| Layer | | Reference Example 4 | Reference Example 5 | Reference Example 6 |
|---|---|---|---|---|
| Third layer | Resin | A2/A3 [90/10 wt%] | A5 | A5 |
| | Heat stabilizer | E1 (0.05)/ E2 (0.15) | E1 (0.05)/ E2 (0.15) | E1 (0.05)/ E2 (0.15) |
| | Weather resistant agent | F1 (0.2)/ F2 (0.4) | F1 (0.2)/ F2 (0.4) | F1 (0.2)/ F2 (0.4) |
| | Lubricant | K1 (0.06) | K1 (0.06) | K1 (0.06) |
| | Layer thickness (μm) | 20 | 20 | 20 |
| Total Layer thickness (μm) | | 100 | 100 | 100 |

(Reference Examples 7, 8 and 9)

Pellets of resin compositions constituting respective layers are made in the same manner as in Reference Example 1. A five-layer inflation film having thicknesses of respective layers described in Tables 6 and 7 is formed using a five-layer inflation machine. The resulting five-layer inflation film is cut to obtain an agricultural covering film.

Table 6

| Layer | | Reference Example 7 | Reference Example 8 | Reference Example 9 |
|---|---|---|---|---|
| First layer | Resin | A2/A3 [90/10 wt%] | A2/A3 [90/10 wt%] | A4 |
| | Heat stabilizer | E1 (0.05)/ E2 (0.15) | E1 (0.05)/ E2 (0.15) | E1 (0.05)/ E2 (0.15) |
| | Weather resistant agent | F1 (0.2)/ F2 (0.4) | F1 (0.2)/ F2 (0.4) | F1 (0.2)/ F2 (0.4) |
| | Ultraviolet absorber | G1 (0.24) | G1 (0.24) | G1 (0.24) |
| | Lubricant | K1 (0.06) | K1 (0.06) | K1 (0.06) |
| | Layer thickness (μm) | 20 | 20 | 20 |
| Second layer | Resin | A1 | A1 | A1 |
| | Heat stabilizer | E2 (0.06) | E2 (0.06) | E2 (0.06) |
| | Weather resistant agent | F3 (0.6) | F1 (0.6) | F1 (0.6) |
| | Radiation blocking agent | J1 (12) | J3 (12) | J3 (12) |
| | Layer thickness (μm) | 60 | 60 | 60 |

(continued)

| Layer | | Reference Example 7 | Reference Example 8 | Reference Example 9 |
|---|---|---|---|---|
| Third layer | Resin | A6 | A6 | A6 |
| | Heat stabilizer | E2 (0.06) | E2 (0.06) | E2 (0.06) |
| | Weather resistant agent | F3 (0.6) | F1 (0.6) | F1 (0.6) |
| | Near infrared ray blocking agent | None | None | L1 (5) |
| | Layer thickness (μm) | 40 | 40 | 40 |

Table 7

| Layer | | Reference Example 7 | Reference Example 8 | Reference Example 9 |
|---|---|---|---|---|
| Fourth layer | Resin | A1 | A1 | A1 |
| | Heat stabilizer | E2 (0.06) | E2 (0.06) | E2 (0.06) |
| | Weather resistant agent | F3 (0.6) | F1 (0.6) | F1 (0.6) |
| | Radiation blocking agent | J1 (12) | J3 (12) | J3 (12) |
| | Layer thickness (μm) | 60 | 60 | 60 |
| Fifth layer | Resin | A2/A3 [90/10 wt%] | A2/A3 [90/10 wt%] | A4 |
| | Heat stabilizer | E1 (0.05)/ E2 (0.15) | E1 (0.05)/ E2 (0.15) | E1 (0.05)/ E2 (0.15) |
| | Weather resistant agent | F1 (0.2)/ F2 (0.4) | F1 (0.2)/ F2 (0.4) | F1 (0.2)/ F2 (0.4) |
| | Layer thickness (μm) | 20 | 20 | 20 |
| Total Layer thickness (μm) | | 200 | 200 | 200 |

A1: Ethylene/alkenyl aromatic hydrocarbon copolymer (a volume-based average molecular weight: 297,000, molecular weight distribution (a weight-average molecular weight/a volume-based average molecular weight): 2.21, glass transition temperature: -10°C, styrene unit content: 26 mol%)
A2: Sumitomo Chemical Co., Ltd., Sumikathene E, FV403-0
A3: Low density polyethylene (trade name: Sumikathene F200, Density: 0.923 g/cm$^3$, manufactured by Sumitomo Chemical Co., Ltd.)
A4: Low density polyethylene (trade name: Sumikathene F208-1, Density: 0.923 g/cm$^3$, manufactured by Sumitomo Chemical Co., Ltd.)
A5: Ethylene/vinyl acetate copolymer (trade name: Evatate D2011, Vinyl acetate unit content: 5 wt%, manufactured by Sumitomo Chemical Co., Ltd.)
A6: Ethylene/vinyl acetate copolymer (trade name: Evatate H2031, Vinyl acetate unit content: 19 wt%, manufactured by Sumitomo Chemical Co., Ltd.)
E1: Trade name: Sumilizer BP76, manufactured by Sumitomo Chemical Co., Ltd.
E2: Irgafos P168, manufactured by Chiba Specialty chemicals Corp.
E3: Trade name: Sumilizer BHT, manufactured by Sumitomo Chemical Co., Ltd.

E4: Irganox 1010, manufactured by Chiba Specialty chemicals Corp.
F1: Hindered amine-based compound (trade name: Kimasorb 944LD, manufactured by Chiba Specialty chemicals Corp.)
F2: Hindered amine-based compound (trade name: Tinuvin 622LD, manufactured by Chiba Specialty chemicals Corp.)
F3: Hindered amine-based compound (trade name: Tinuvin 462, manufactured by Chiba Specialty chemicals Corp.)
F4: Hindered amine-based compound (trade name: Tinuvin 464, manufactured by Chiba Specialty chemicals Corp.)
F5: Hindered amine-based compound (trade name: Hostavin N30, manufactured by Clariant Corp.)
G1: trade name: Sumisorb 130, manufactured by Sumitomo Chemical Co., Ltd.
G2: trade name: Sumisorb 300, manufactured by Sumitomo Chemical Co., Ltd.
H1: Diglycerine sesquioleate
H2: Mixture of monoglycerine monostearate/diglycerine sesquioleate in weight ratio of 3/7
H3: Sorbitan sesquioleate H4: Sorbitan monooleate propylene oxide 1 mol adduct H5: Tetraglycerin tristearate
I1: Fluorine-based surfactant (trade name: Unidaine DS403, manufactured by Daikin Industries, Ltd.)
I2: Fluorine-based compound (trade name: Surflon KC14, manufactured by Asahi Glass Co. Ltd.)
J1: Particle of hydrotalcite compound (trade name: DHT-4A, manufactured by Kyowa Chemical Industry Co. Ltd.; volume-based average particle diameter = 0.3 μm; specific surface area measured by the BET method = 18 $m^2/g$; $Mg^{2+}_{0.69}Al^{3+}_{0.31}(OH^-)_2 \cdot (CO_3^{2-})_{0.155} \cdot 0.54H_2O$)
J2: Particle of complex hydroxides (trade name : FUJIREIN LS, manufactured by Fuji Chemical Co., Ltd. ; volume-based average particle diameter = 0.9 μm; specific surface area measured by the BET method = 9 $m^2/g$).
J3: Particle of lithium aluminum complex hydroxide (trade name: Mizukalac; manufactured by Mizusawa Industrial Chemicals, Ltd.; volume-based average particle diameter = 0.4 μm; specific surface area measured by the BET method = 20 $m^2/g$; $Li+_2Al^{3+}4(OH-)_{12} \cdot (CO_3{}^{2}-) \cdot 3H_2O$)
K1: Fatty amide compound, Ethylenebisoleicamide
K2: Fatty amide compound, Erucicamide
K3: Fatty amide compound, Oleicamide
K4: Fatty amide compound, Ethylenebisstearicamide
L1: Particle of zinc oxide-based compound (trade name: SZ60, manufactured by Nippon Inorganic Color & Chemical Co., Ltd.; volume-based average particle diameter = 6 μm; specific surface area measured by the BET method = 12 $m^2/g$; $SiO_2$-coating ZnO)

## Claims

1. A thin layer body comprising at least three layers including at least one intermediate layer comprising an ethylene/α-olefin/alkenyl aromatic hydrocarbon copolymer having any of the following properties.

   (a) it has substantially no crystallinity property,
   (b) it shows substantially no peak in an endothermic curve (a DSC chart) obtained by means of a differential scanning calorimeter; and
   (c) it has a ratio of the area of the peak appearing in the range of from 34.0 to 36.0 ppm in a $^{13}C$-NMR spectrum to that of the peak appearing in the rangé of from 36.0 to 38.0 ppm of from 0.01 to 0.25; and outermost layers other than the above intermediate layer,

2. The thin layer body according to Claim 1, wherein said copolymer is a copolymer whose repeating units derived from the alkenyl aromatic hydrocarbon substantially have no stereoregularity.

3. The thin layer body according to Claim I or 2, wherein said copolymer is a copolymer which has a loss tangent (tan δ) whose maximal value, x, and a fraction, S (mol%), of repeating units derived from the alkenyl aromatic hydrocarbon satisfy formula (1):

$$x > -0.0005 \times S^2 + 0.06 \times S + 0.04 \quad (1)$$

   wherein tan δ indicates a ratio (E''/E') of a loss elastic modulus (E'') to a storing elastic modulus (E') obtained by the measurement of solid dynamic viscoelasticity using 20 mm × 3.0 mm × 0.3 mm pressed sheet under the conditions of a frequency at 5 Hz, a rate of temperature elevation at 2°C/minute and a displacement amplitude at 10 μm.

4. Use of a thin layer body according to any one of claims 1 to 3 as an agricultural covering film.

## Patentansprüche

1. Dünnschichtiger Gegenstand, umfassend mindestens drei Schichten, einschließlich mindestens einer Zwischenschicht, welche ein Ethylen/$\alpha$-Olefin-/alkenylaromatischer Kohlenwasserstoff-Copolymer mit den folgenden Eigenschaften umfasst:

   (a) es weist im wesentlichen keine Kristallinitätseigenschaft auf,
   (b) es zeigt im wesentlichen keinen Peak in einer mittels eines Differentialscanning-Kalorimeters erhaltenen endothermen Kurve (DSC-Diagramm); und
   (c) es weist ein Verhältnis der Fläche des Peaks, welcher im Bereich von 34,0 zu 36,0 ppm in einem $^{13}$C-NMR-Spektrum auftritt, zu der Fläche des Peaks, welcher im Bereich von 36,0 bis 38,0 ppm auftritt von 0,01 zu 0,25 auf;

   und äußeren Schichten, die von der vorstehenden Zwischenschicht verschieden sind.

2. Dünnschichtiger Gegenstand gemäß Anspruch 1, wobei das Copolymer ein Copolymer ist, dessen vom alkenylaromatischen Kohlenwasserstoff abgeleitete Wiederholungseinheiten im wesentlichen keine Stereoregularität aufweisen.

3. Dünnschichtiger Gegenstand gemäß Anspruch 1 oder 2, wobei das Copolymer ein Copolymer ist, das einen Verlusttangens (tan $\delta$) aufweist, dessen Maximalwert, x, und ein Anteil, S (Mol-%), der vom alkenylaromatischen Kohlenwasserstoff abgeleiteten Wiederholungseinheiten der Formel (1) entsprechen:

$$x > -0{,}0005 \times S^2 + 0{,}06 \times S + 0{,}04 \qquad (1)$$

   wobei tan $\delta$ ein Verhältnis (E"/E') eines Verlustelastizitätsmoduls (E") zu einem Lagerelastizitätsmodul (E') anzeigt, erhalten durch die Messung der dynamischen Viskoelastizität in festem Zustand unter Verwendung einer 20 mm $\times$ 3,0 mm $\times$ 0,3 mm gepressten Folie, unter den Bedingungen einer Frequenz von 5 Hz, einer Temperatursteigerungsrate von 2°C/Minute und einer Verschiebungsamplitude bei 10 $\mu$m.

4. Verwendung eines dünnschichtigen Gegenstands gemäß einem der Ansprüche 1 bis 3 als eine Abdeckfolie in der Landwirtschaft.

## Revendications

1. Corps à couches minces comprenant au moins trois couches incluant au moins une couche intermédiaire comprenant un copolymère éthylène/$\alpha$-oléfine/hydrocarbure alcényl-aromatique ayant l'une quelconque des propriétés suivantes :

   (a) il n'a sensiblement aucune propriété de cristallinité,
   (b) il ne présente sensiblement aucun pic dans une courbe endothermique (un diagramme de DSC) obtenue au moyen d'un calorimètre à balayage différentiel ; et
   (c) il a un rapport de l'aire du pic apparaissant dans la plage de 34,0 à 36,0 ppm dans un spectre de RMN de $^{13}$C à celle du pic apparaissant dans la plage de 36,0 à 38,0 ppm de 0,01 à 0,25 ; et des couches les plus externes différentes de la couche intermédiaire ci-dessus.

2. Corps à couches minces selon la revendication 1 où ledit copolymère est un copolymère dont les unités répétées dérivées de l'hydrocarbure alcényl-aromatique n'ont sensiblement pas de stéréorégularité.

3. Corps à couches minces selon la revendication 1 ou 2 où ledit copolymère est un copolymère qui a une tangente de l'angle de pertes (tan $\delta$) dont la valeur maximale, x, et une fraction, S (mol%), d'unités répétées dérivées de l'hydrocarbure alcényl-aromatique satisfont la formule (1) :

$$x > -0,0005 \times S^2 + 0,06 \times S + 0,04 \quad (1)$$

où tan δ indique un rapport (E"/E') d'un module élastique de perte (E'') à un module élastique d'accumulation (E') obtenu par la mesure de la viscoélasticité dynamique solide au moyen d'une feuille pressée de 20 mm × 3,0 mm × 0,3 mm dans les conditions d'une fréquence à 5 Hz, d'une vitesse d'élévation de la température à 2°C/minute et d'une amplitude de déplacement à 10 μm.

**4.** Utilisation d'un corps à couches minces selon l'une quelconque des revendications 1 à 3 comme film de couverture agricole.